# EUROPÄISCHE PATENTANMELDUNG

(11) **EP 2 899 679 A1**
(43) Veröffentlichungstag der Anmeldung: **29.07.2015**
(21) Anmeldenummer: 14152450.4
(22) Anmeldetag: 24.01.2014
(51) Int. Cl.: G06Q 10/06

(54) **Auswahl von Schaltgeräten für Motoranwendungen**

(71) Anmelder: Siemens Aktiengesellschaft, 80333 München (DE)
(72) Erfinder: Hahne, Michael, 92289 Ursensollen (DE); Weiss, Herbert, 92266 Ensdorf (DE)

(57) **Zusammenfassung**

Die Erfindung betrifft ein Verfahren zur Auswahl von Schaltgeräten für Motoranwendungen von Elektromotoren, wobei eine domänenspezifische Sprache (3) zur Beschreibung von Schaltgeräten und Elektromotoren definiert und verwendet wird und eine modulare Softwarestruktur zur Beschreibung von Motoranwendungen und Auswahl eines Schaltgerätes in Abhängigkeit von der Beschreibung eines Elektromotors und der Beschreibung einer Motoranwendung definiert und verwendet wird.

## Beschreibung

Die Erfindung betrifft ein Verfahren zur Auswahl von Schaltgeräten für Motoranwendungen von Elektromotoren.

Konkrete technische Anwendungen von Elektromotoren erfordern den jeweiligen Anwendungen angepasste Schaltgeräte für die Elektromotoren. Derartige Anwendungen realisieren beispielsweise den Betrieb von Förderbändern, Kreiselpumpen oder Lüftern mittels Elektromotoren. Zu den einer jeweiligen Anwendung anzupassenden Schaltgeräten zählen insbesondere sogenannte Sanftstarter, die auch als Softstarter bezeichnet werden und die Leistung von Elektromotoren bei deren Einschalten geeignet steuern und begrenzen, um Elektromotoren vor hohen Einschaltströmen und/oder von den Elektromotoren angetriebene Komponenten vor zu großen Drehmomenten und Beschleunigungen zu schützen.

Die Auswahl eines geeigneten Schaltgerätes für eine bestimmte Motoranwendung wird häufig computergestützt durch Simulations- und Auswahlsoftware erleichtert, die Eigenschaften der Elektromotoren und der Motoranwendungen berücksichtigt.

Der Erfindung liegt die Aufgabe zugrunde, ein verbessertes Verfahren zur Auswahl von Schaltgeräten für Motoranwendungen von Elektromotoren anzugeben.

Die Aufgabe wird erfindungsgemäß durch die Merkmale des Anspruchs 1 gelöst.

Vorteilhafte Ausgestaltungen der Erfindung sind Gegenstand der Unteransprüche.

Bei dem erfindungsgemäßen Verfahren zur Auswahl von Schaltgeräten für Motoranwendungen von Elektromotoren wird eine domänenspezifische Sprache zur Beschreibung von Schaltgeräten und Elektromotoren definiert und verwendet. Ferner wird eine modulare Softwarestruktur zur Beschreibung von Motoranwendungen und Auswahl eines Schaltgerätes in Abhängigkeit von der Beschreibung eines Elektromotors und der Beschreibung einer Motoranwendung definiert und verwendet.

Unter einer domänenspezifischen Sprache, die auch als DSL (Domain-Specific Language) bezeichnet wird, wird eine formale Programmier- und/oder Beschreibungssprache verstanden, die speziell für ein bestimmtes Problemfeld entworfen wird.

Erfindungsgemäß wird eine domänenspezifische Sprache zur Beschreibung von Schaltgeräten und Elektromotoren in einem einheitlichen Format definiert. Dies ermöglicht eine vereinfachte Integration neuer Schaltgeräte und Elektromotoren sowie eine einfache Anpassung oder Korrektur einer Beschreibung in Fällen, in denen beispielsweise ein Motormodell aktualisiert oder eine fehlerhafte Beschreibung korrigiert werden muss. Insbesondere können neue Schaltgeräte und Elektromotoren integriert und Beschreibungen angepasst und korrigiert werden, ohne Software aktualisieren zu müssen.

Die modulare Strukturierung der Software zur Beschreibung von Motoranwendungen und Auswahl von Schaltgeräten ermöglicht es, diese Software in einfacher Weise durch Ergänzung und/oder Austausch von Softwaremodulen zu ergänzen, anzupassen und zu korrigieren.

Insgesamt vereinfacht das erfindungsgemäße Verfahren die Aktualisierung sowohl der bei der Auswahl berücksichtigten Hardware (Schaltgeräte und Elektromotoren) als auch der Software, die zur Modellierung der Motoranwendungen und Auswahl der Schaltgeräte verwendet wird. Insbesondere erfordern derartige Aktualisierungen nicht jeweils die Entwicklung einer neuen Version der Basissoftware. Derartige Entwicklungen sind kostspielig und zeitaufwändig und führen daher dazu, dass Neuerungen und Ergänzungen oft über längere Zeiträume, die meist jeweils mehr als ein Jahr betragen, nicht zur Verfügung stehen. Während solcher Zeiträume kann es durch die Verwendung eines veralteten Systems zu Fehlern und Fehlinterpretationen und dadurch verursachten negativen Konsequenzen kommen. Beispielsweise werden falsche oder ungeeignete Schaltgeräte ausgewählt, Geräte werden daraufhin zurückgegeben und/oder müssen ausgetauscht werden, vom Softwarehersteller müssen umfangreiche Supportdienste zur Verfügung gestellt und Fehler korrigiert oder sogar Konventionalstrafen geleistet werden, und es droht ein Kundenverlust. Das erfindungsgemäße Verfahren ermöglicht es daher vorteilhaft, derartige Fehler und deren Konsequenzen zu vermeiden oder wenigstens erheblich zu reduzieren.

Eine Ausgestaltung der Erfindung sieht vor, dass die Beschreibung wenigstens eines Schaltgerätes und/oder wenigstens eines Elektromotors in der domänenspezifischen Sprache automatisch aus Daten einer Datenquelle erzeugt wird.

Dadurch kann die Beschreibung von Schaltgeräten und Elektromotoren vorteilhaft automatisch erzeugt und aktualisiert werden, wodurch die Erzeugung und Aktualisierung der Beschreibungen beschleunigt, verbilligt und hinsichtlich ihrer Fehleranfälligkeit verbessert werden kann.

Bei der vorgenannten Ausgestaltung wird zur automatischen Erzeugung der Beschreibung wenigstens eines Schaltgerätes und/oder wenigstens eines Elektromotors in der domänenspezifischen Sprache aus Daten einer Datenquelle vorzugsweise ein an die Datenquelle angepasstes Extraktions-Softwaremodul, beispielsweise ein Extraktions-Plug-in zur Extraktion von Daten aus der Datenquelle und Umwandlung dieser Daten in die domänenspezifische Sprache, verwendet.

Durch die Verwendung von an Datenquellen angepasste Extraktions-Softwaremodule wie Extraktions-Plug-ins zur Extraktion von Daten aus Datenquellen und Umwandlung dieser Daten in die domänenspezifische Sprache können in einfacher Weise neue Datenquellen zur Beschreibung von Schaltgeräten und/oder Elektromotoren eingebunden werden, ohne die Basissoftware verändern oder erweitern zu müssen.

Eine weitere Ausgestaltung der Erfindung sieht vor, dass zur Beschreibung wenigstens einer Motoranwendung und Auswahl eines Schaltgerätes in Abhängigkeit von der Beschreibung eines Elektromotors und der Beschreibung dieser Motoranwendung eine an die Motoranwendung angepasste Anwendungssoftwarekomponente verwendet wird.

Dadurch können durch Einbindung und Änderung einzelner Anwendungssoftwarekomponenten in einfacher Weise neue Motoranwendungen in das Verfahren integriert und die Modellierung bereits berücksichtigter Motoranwendungen angepasst werden, ohne die Basissoftware ändern zu müssen.

Bei der vorgenannten Ausgestaltung werden in der domänenspezifischen Sprache formulierte Eigenschaften von Schaltgeräten und Elektromotoren vorzugsweise in eine von der Anwendungssoftwarekomponente verwendete Beschreibungssprache übertragen und von der Anwendungssoftwarekomponente verwendet. Die in der domänenspezifischen Sprache formulierten Eigenschaften von Schaltgeräten und Elektromotoren werden dabei ferner vorzugsweise mittels eines an die Anwendungssoftwarekomponente angepassten Übersetzer-Softwaremoduls in die von der Anwendungssoftwarekomponente verwendete Beschreibungssprache übertragen.

Diese Ausgestaltung der Erfindung berücksichtigt, dass eine Anwendungssoftwarekomponente in der Regel eine Beschreibungssprache verwendet, die sich von der domänenspezifischen Sprache unterscheidet. Um die in der domänenspezifischen Sprache formulierten Daten für eine Anwendungssoftwarekomponente nutzbar zu machen, werden diese daher in die von der Anwendungssoftwarekomponente verwendete Beschreibungssprache übertragen. Die Verwendung eines an die Anwendungssoftwarekomponente angepassten Übersetzer-Softwaremoduls für diesen Zweck ermöglicht die einfache und flexible Integration verschiedener Anwendungssoftwarekomponenten und Beschreibungssprachen.

Eine weitere Ausgestaltung der Erfindung sieht vor, dass die Schaltgeräte Sanftstarter für Elektromotoren sind.

Diese Ausgestaltung berücksichtigt vorteilhaft, dass Sanftstarter für viele Motoranwendungen besonders wichtige Schaltgeräte sind.

In der Beschreibung eines Sanftstarters werden dabei vorzugsweise wenigstens eine maximale Anlaufanzahl von Anläufen pro Zeit und/oder eine maximale elektrische Spannung und/oder ein Nennstrom und/oder eine Überlastklasse des Sanftstarters angegeben.

In der Beschreibung eines Elektromotors wird vorzugsweise wenigstens eine Nennleistung und/oder eine Motorfrequenz und/oder eine Polanzahl elektrischer Pole des Elektromotors angegeben.

In der Beschreibung einer Motoranwendung werden vorzugsweise wenigstens eine maximale Höhe über dem mittleren Meeresspiegel und/oder eine maximale Umgebungstemperatur und/oder eine Hauptspannung und/oder ein Lasttyp und/oder ein Trägheitsmoment einer Lastwelle und/oder ein Drehmoment einer Lastwelle angegeben.

Die genannten Eigenschaften von Sanftstartern, Elektromotoren und Motoranwendungen sind für die Auswahl eines Schaltgerätes, insbesondere eines Sanftstarters, für Motoranwendungen besonders wichtig und werden daher bevorzugt in der Beschreibung von Sanftstartern, Elektromotoren und Motoranwendungen angegeben.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit einer Zeichnung näher erläutert werden.

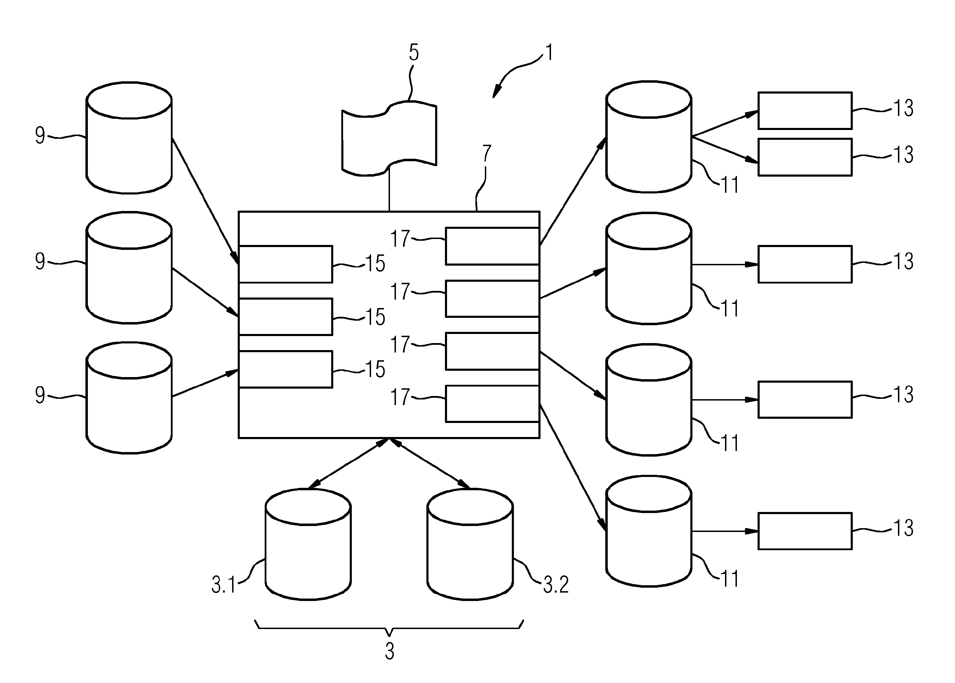

Dabei zeigt die einzige Figur schematisch eine Softwarearchitektur für eine computerimplementierte Auswahl von als Sanftstartern ausgebildeten Schaltgeräten für Motoranwendungen von Elektromotoren.

Die Softwarearchitektur weist eine DSL-Softwareeinheit 1 zur Beschreibung von Sanftstartern und Elektromotoren in einer domänenspezifischen Sprache (DSL) 3 auf. Die DSL 3 umfasst einen Schaltgerät-DSL-Anteil 3.1 zur Beschreibung von Sanftstartern und einen Motor-DSL-Anteil 3.2 zur Beschreibung von Elektromotoren und ist mittels einer DSL-Spezifikation 5 definiert. Die DSL-Softwareeinheit 1 umfasst eine Umwandlungskomponente 7 zur automatischen Erzeugung von Beschreibungen von Sanftstartern und Elektromotoren in der DSL 3 aus Daten von Datenquellen 9 und zur Übertragung von in der DSL 3 formulierten Eigenschaften von Schaltgeräten und Elektromotoren in andere Beschreibungssprachen 11, die von Anwendungssoftwarekomponenten 13 zur Beschreibung von Motoranwendungen und Auswahl eines Schaltgerätes in Abhängigkeit von der Beschreibung eines Elektromotors und der Beschreibung einer Motoranwendung verwendet werden.

Als Datenquellen 9 für Eigenschaften von Sanftstartern und Elektromotoren können dabei beispielsweise maschinenlesbare Gerätebeschreibungen, z.B. analog zu einer so genannten IODD (= IO Device Description), und/oder verfügbare Engineering- oder Simulationstools für Sanftstarter und Elektromotoren, beispielsweise den von Siemens entwickelten Tools Softstarter ES Classic oder Win Softstarter, verwendet werden. Daten einer bestimmten Datenquelle 9 werden durch ein an die Datenquelle 9 angepasstes Extraktions-Softwaremodul 15 analysiert, extrahiert und in der DSL 3 formuliert. Ein Extraktions-Softwaremodul 15 wird beispielsweise als ein spezielles Extraktions-Plug-in realisiert, das von der Umwandlungskomponente 7 zur Analyse einer bestimmten Datenquelle 9 eingebunden und verwendet wird.

Zur Übertragung von in der DSL 3 formulierten Eigenschaften von Schaltgeräten und Elektromotoren in eine andere Beschreibungssprache 11, die von einer Anwendungssoftwarekomponente 13 verwendet wird, wird ein an die jeweilige Anwendungssoftwarekomponente 13 angepasstes Übersetzer-Softwaremodul 17 verwendet. Ein Übersetzer-Softwaremodul 17 wird beispielsweise als ein spezielles Übersetzer-Plug-in realisiert, das von der Umwandlungskomponente 7 für die jeweilige Anwendungssoftwarekomponente 13 eingebunden und verwendet wird.

Die Beschreibungen von Sanftstartern und Elektromotoren in der DSL 3 enthalten beispielsweise allgemeine Attribute, die sowohl Sanftstartern als auch Elektromotoren zugeordnet werden, und spezielle Attribute, die jeweils nur Sanftstartern oder Elektromotoren zugeordnet werden.

Allgemeine Attribute sind beispielsweise Kommentare zu einem Gerät, ein Gerätename, eine Bestellnummer, ein Objekttyp oder eine Identifikationsnummer, die in Form entsprechender Variablen formuliert werden, wie z.B:
VARIABLE Comment;
   //*Gerätespezifischer Kommentar*
VARIABLE Name;
   //*Gerätespezifischer Name*
VARIABLE Mlfb;
   //*Bestellnummer*
VARIABLE ObjectType;
   //*Typ des Objekts*
VARIABLE ObjectId;
   //*Eindeutige Identifikationsnummer des Objekts.*

Spezielle Attribute von Elektromotoren sind beispielsweise eine Nennleistung, eine Motorfrequenz oder eine Polanzahl elektrischer Pole des Elektromotors. Spezielle Attribute von Sanftstartern sind beispielsweise eine maximale Anlaufanzahl von Anläufen pro Zeit, eine maximale elektrische Spannung, ein Nennstrom oder eine Überlastklasse des Sanftstarters. Auch die speziellen Attribute werden in der DSL 3 beispielsweise in Form entsprechender Variablen formuliert.

Ein bestimmter Elektromotor wird daher durch die Werte verschiedener Variablen beschrieben, die jeweils ein allgemeines Attribut (z.B. VARIABLE Mlfb für die Bestellnummer des Elektromotors) oder ein spezielles Attribut (z.B. VARIABLE ANZAHL_POLE für die Polanzahl des Elektromotors) angeben, z.B. gemäß:
VARIABLE ObjectType;
   //*Typ des Objekts = MOTOR (Objekttypnummer, Konstante)*
VARIABLE ObjectId;
   //*Identifikationsnummer des Objekts, z.B. SIEMENS_3A_MLFB1*
   //*(eindeutige Objektnummer, Konstante)*
VARIABLE TypeCode;
   //*u.a. für die Parametrierung.*
   //*Z.B. Bit* 15 == 1 *(Motor nicht manuell änderbar)*
   //*Bit* 15 == 0 *(Motor ist änderbar)*
VARIABLE UICapabilities: 1;
   //*1* = *der Motor wird im Simulations-Tool angezeigt*
VARIABLE Hersteller;
   //*Hersteller des Motors, z.B. "Siemens"*
VARIABLE Typ;
   //*Typ des Motors, z.B. "IEC" oder "Nema"*
VARIABLE Mlfb;
   //*Bestellnummer des Motors, z.B. "3RK1* .... *"*
VARIABLE NENN_LEISTUNG;
   //*Nennleistung des Motors in KW*
VARIABLE NENN_DREHMOMENT;
   //*Nenndrehmoment des Motors in Nm*
VARIABLE FREQUENZ;
   //*Frequenz des Motors in Hz*
VARIABLE ANZAHL_POLE;
   //*Anzahl der Pole des Motors* (2, 4, 6, ... , 16).

Entsprechend wird ein bestimmter Sanftstarter durch die Werte verschiedener Variablen beschrieben, z.B. gemäß:
VARIABLE ObjectType;
   //*Typ des Objekts* = *MOTOR_CONTROL (Objektnummer, Konstante)* VARIABLE ObjectId;
   //*Identifikationsnummer des Objekts, z.B.SIEMENS_3W44_MLFB1*
   //*(eindeutige Objektnummer, Konstante)*
VARIABLE TypeCode;
   //*u.a. für die Parametrierung.*
   //*Z.B. Bit* 15 == 1 *(Schaltgerät nicht manuell änderbar)*
   //*Bit* 15 == 0 *(Schaltgerät ist änderbar)*
VARIABLE FWMainVersion: 1;
VARIABLE FWVersion: "V1.0";
   //*Firmware-Version*
VARIABLE UICapabilities: 1;
   //*1 = Schaltgerät wird im Simulations-Tool angezeigt*
VARIABLE Hersteller;
   //*Hersteller des Schaltgeräts, z.B. "Siemens"*
VARIABLE Typ;
   //*Typ des Schaltgeräts, z.B. "LK1 "*
VARIABLE Mlfb;
   //*Bestellnummer des Schaltgeräts, z.B. "3RW44* .... *"*
VARIABLE NENN_STROM;
   //*Nennstrom des Schaltgeräts in A*
VARIABLE MAX_SPANNUNG;
   //*Maximale Spannung des Schaltgeräts in V*
VARIABLE START;
   //*Anläufe des Schaltgeräts pro Stunde*
VARIABLE UE_CLASS;
   //*Überlastklasse des Schaltgeräts.*

Mittels der Anwendungssoftwarekomponenten 13 werden jeweils Motoranwendungen beschrieben und modelliert und dazu passende Sanftstarter ausgewählt. Motoranwendungen werden dabei beispielsweise durch eine maximale Höhe über dem mittleren Meeresspiegel, eine maximale Umgebungstemperatur, eine Hauptspannung, einen Lasttyp, ein Trägheitsmoment einer Lastwelle und/oder ein Drehmoment einer Lastwelle sowie Motor- und Sanftstarterdaten beschrieben. Eine Anwendungssoftwarekomponente 13 zur Beschreibung und Modellierung einer Motoranwendung und einer Auswahl eines Sanftstarters umfasst entsprechende Methoden. Derartige Methoden können beispielsweise sein:
Allgemeine Daten:
   SetMaxAltitude (...) und GetMaxAltitude (...)
      //Max. Höhe über NN setzen und auslesen
   SetMainVoltage (...) und GetMainVoltage (...)
      //Hauptspannung setzen und auslesen
   SetTemperature (...) und GetTemperature (...)
      //Umgebungstemperatur setzen und auslesen
   SetFrequency (...) und GetFrequency (...)
      //Frequenz setzen und auslesen
Motordaten:
   SetRatedPower (...) und GetRatedPower (...)
      //Nennleistung setzen und auslesen
   SetNoPoles (...) und GetNoPoles (...)
      //Polanzahl setzen und auslesen
Lastdaten:
   SetLoadType (...) und GetLoadType (...)
      //Lasttyp setzen und auslesen
   SetLoadShaft (...) und GetLoadShaft (...)
      //Trägheitsmoment setzen und auslesen
Motor:
   SetMotor (...) und GetMotor (...)
      //Motor selektieren und auslesen
      //Link
   SetStartingTime (...) und GetStartingTime (...)
      //Anlaufzeit setzen und auslesen
   SetStartingTorque (...) und GetStartingTorque (...)
      //Anlaufmoment setzen und auslesen
Sanftstarter:
   SetStartsHour (...) und GetStartsHour (...)
      //Anläufe pro Stunde setzen und auslesen
   SetBypassContactor (...) und GetBypassContactor (...)
      //Bypass-Schutz setzen und auslesen
   SetIntermittenceOn (...) und GetIntermittenceOn (...)
      //Intermitt. Faktor Ein setzen und auslesen
Berechnung:
   StartSimulation (...)
      //Simulation/Berechnung starten
   GetSimulationResults (...)
      //Ergebnisse lesen.

Obwohl die Erfindung im Detail durch ein bevorzugtes Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Auswahl von Schaltgeräten für Motoranwendungen von Elektromotoren, wobei
- eine domänenspezifische Sprache (3) zur Beschreibung von Schaltgeräten und Elektromotoren definiert und verwendet wird,
- und eine modulare Softwarestruktur zur Beschreibung von Motoranwendungen und Auswahl eines Schaltgerätes in Abhängigkeit von der Beschreibung eines Elektromotors und der Beschreibung einer Motoranwendung definiert und verwendet wird.

2. Verfahren nach Anspruch 1,
**dadurch gekennzeichnet, dass** die Beschreibung wenigstens eines Schaltgerätes und/oder wenigstens eines Elektromotors in der domänenspezifischen Sprache (3) automatisch aus Daten einer Datenquelle (9) erzeugt wird.

3. Verfahren nach Anspruch 2,
**dadurch gekennzeichnet, dass** zur automatischen Erzeugung der Beschreibung wenigstens eines Schaltgerätes und/oder wenigstens eines Elektromotors in der domänenspezifischen Sprache (3) aus Daten einer Datenquelle (9) ein an die Datenquelle (9) angepasstes Extraktions-Softwaremodul (15) verwendet wird.

4. Verfahren nach Anspruch 3,
**dadurch gekennzeichnet, dass** als an eine Datenquelle (9) angepasstes Extraktions-Softwaremodul (15) ein Extraktions-Plug-in zur Extraktion von Daten aus der Datenquelle (9) und Umwandlung dieser Daten in die domänenspezifische Sprache (3) verwendet wird.

5. Verfahren nach einem der vorhergehenden Ansprüche, **dadurch gekennzeichnet, dass** zur Beschreibung wenigstens einer Motoranwendung und Auswahl eines Schaltgerätes in Abhängigkeit von der Beschreibung eines Elektromotors und der Beschreibung dieser Motoranwendung eine an die Motoranwendung angepasste Anwendungssoftwarekomponente (13) verwendet wird.

6. Verfahren nach Anspruch 5,
**dadurch gekennzeichnet, dass** in der domänenspezifischen Sprache (3) formulierte Eigenschaften von Schaltgeräten und Elektromotoren in eine von der Anwendungssoftwarekomponente (13) verwendete Beschreibungssprache (11) übertragen und von der Anwendungssoftwarekomponente (13) verwendet werden.

7. Verfahren nach Anspruch 6,
**dadurch gekennzeichnet, dass** die in der domänenspezifischen Sprache (3) formulierten Eigenschaften von Schaltgeräten und Elektromotoren mittels eines an die Anwendungssoftwarekomponente (13) angepassten Übersetzer-Softwaremoduls (17) in die von der Anwendungssoftwarekomponente (13) verwendete Beschreibungssprache (11) übertragen werden.

8. Verfahren nach einem der vorhergehenden Ansprüche, **dadurch gekennzeichnet, dass** die Schaltgeräte Sanftstarter für Elektromotoren sind.
